# DEMANDE DE BREVET EUROPEEN

(11) **EP 1 843 440 A1**
(43) Date de publication de la demande: **10.10.2007**
(21) Numéro de dépôt: 07290287.7
(22) Date de dépôt: 06.03.2007
(51) Int. Cl.: H02G 3/06

(54) **Accessoire de raccordement étanche avec une membrane souple entre un conduit électrique et un boîtier d'appareillage**

(30) Priorité: 07.04.2006 FR 0603086
(71) Demandeur: LEGRAND FRANCE, 87000 Limoges (FR); LEGRAND SNC, 87000 Limoges (FR)
(72) Inventeur: Bellanger, Jérôme, 72000 Le Mans (FR); Decore, Raphaël, 72140 Sillé-le-Guillaume (FR)
(74) Mandataire: Orsini, Fabienne

(57) **Abrégé**

La présente invention concerne un accessoire de raccordement (100) entre les espaces intérieurs (21,11) d'un boîtier (20) d'appareillage électrique et d'un conduit (10) de cheminement de câbles à rapporter en saillie sur une paroi, cet accessoire de raccordement comportant un conduit de passage.

Selon l'invention, il comprend une membrane souple (200) qui obstrue une section dudit conduit de passage, cette membrane souple étant adaptée à s'appliquer autour de chaque conducteur ou câble électrique (1) qui la traverse.

## Description

Cette invention concerne, de manière générale, le raccordement étanche entre un conduit électrique et un boîtier d'appareillage terminal.

Elle concerne plus particulièrement un accessoire de raccordement entre les espaces intérieurs d'un boîtier d'appareillage électrique et d'un conduit de cheminement de câbles à rapporter en saillie sur une paroi, cet accessoire de raccordement comportant un conduit de passage.

### ARRIERE-PLAN TECHNOLOGIQUE

On connaît déjà du document WO 2004 006 401 un conduit étanche pour câbles électriques qui constitue un accessoire de raccordement entre les espaces intérieurs d'une boîte de vitesses et d'un conduit de cheminement de câbles. Le conduit étanche comporte un élément d'étanchéité rigide présentant une base cylindrique et un corps de section conique destiné à s'appliquer contre une paroi de contour d'une ouverture du boîtier. Cet élément d'étanchéité définit des conduits de passage pour câbles électriques et forme un joint d'étanchéité lorsque chacun de ses conduits de passage est traversé par un câble électrique dont le diamètre correspond exactement au diamètre des conduits de passage.

Par ailleurs, on connaît du document DE 198 28 838 un raccord étanche se présentant sous la forme d'un manchon en deux demi-coques assemblées l'une avec l'autre. Chaque demi-coque intégre un demi-manchon d'étanchéité qui est raccordé à un joint inséré dans une gorge de la demi-coque. Ici c'est le joint qui permet de rendre l'intérieur du raccord étanche vis-à-vis de l'extérieur.

### OBJET DE L'INVENTION

Par rapport à l'état de la technique précité, la présente invention propose un accessoire de raccordement tel que défini en introduction dans lequel il est prévu une membrane souple qui obstrue une section dudit conduit de passage, cette membrane souple étant adaptée à s'appliquer autour de chaque conducteur ou câble électrique qui la traverse.

Ainsi, avantageusement grâce à l'invention, la membrane souple épousant le contour des conducteurs ou câbles électriques qui la traversent, bloque les flux d'air pouvant circuler dans ledit conduit de cheminement de câble et évite que ceux-ci ne se propagent dans le boîtier d'appareillage électrique terminal.

D'autres caractéristiques non limitatives et avantageuses de l'accessoire de raccordement conforme à l'invention sont les suivantes :
- la membrane souple est disposée à une extrémité intérieure du conduit de passage ;
- la membrane souple est adaptée à être traversée par plusieurs câbles ou conducteurs électriques en divers endroits ;
- la membrane souple se présente sous la forme d'une plaquette de faible épaisseur dont une partie centrale comporte des zones localisées d'épaisseur amincie aptes à être transpercées par des câbles ou conducteurs électriques ;
- il comprend une coque extérieure dure qui loge ladite membrane souple ;
- il comporte un boîtier de jonction à monter à une extrémité du conduit de cheminement de câbles, prolongé par un conduit tubulaire d'insertion dans le boîtier d'appareillage électrique ;
- ledit conduit tubulaire d'insertion présente une section circulaire dont le diamètre extérieur correspond au diamètre extérieur normalisé d'un conduit rigide d'entrée de câbles ;
- ledit boîtier de jonction présente des parois adaptées à s'appliquer sur la face externe de l'extrémité du conduit de cheminement de câbles en l'entourant complètement ;
- ladite membrane souple obstrue une ouverture d'extrémité du conduit tubulaire d'insertion débouchante dans ledit boîtier de jonction ;
- ladite membrane souple est rapportée dans l'accessoire ou vient de formation avec celui-ci ;
- il comporte deux demi-coques pourvues de moyens de montage pour être montées indépendamment l'une de l'autre sur ledit conduit de cheminement de câbles ;
- lesdits moyens de montage comprennent sur chaque demi-coque au moins deux crochets disposés sur deux bords longitudinaux parallèles de ladite partie pour faire saillie vers l'intérieur dudit logement, les deux crochets d'une des demi-coques étant décalés axialement par rapport aux deux crochets de l'autre demi-coque ;
- lesdits crochets sont conformés pour s'accrocher dans des rainures longitudinales parallèles prévues en renfoncement sur la face externe du socle du conduit de cheminement de câbles ;
- chacune des deux demi-coques comporte des moyens de verrouillage adaptés à coopérer les uns avec les autres pour rendre solidaires les deux demi-coques ;
- lesdits moyens de verrouillage comprennent des griffes qui font saillies d'une paroi d'extrémité d'une des deux demi-coques et des ouvertures qui sont prévues dans une paroi d'extrémité de l'autre des deux demi-coques et qui sont adaptées à recevoir par encliquetage lesdites griffes ; et
- le boîtier de jonction présente une section non circulaire.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :
- la figure 1A est une vue schématique en perspective d'un conduit de cheminement de câbles ou de conducteurs électriques dont une extrémité est raccordée à un boîtier d'appareillage électrique au moyen d'un accessoire de raccordement selon l'invention ;
- la figure 1 B est une vue identique à celle de la figure 1A avec le conduit de cheminement de câbles et l'accessoire de raccordement ouverts ;
- la figure 2 est une vue schématique en perspective du côté intérieur de l'accessoire de raccordement de la figure 1A à l'état sorti de moulage sans sa membrane souple ;
- la figure 3 est une vue en bout selon la flèche F de la figure 2 ;
- les figures 4A à 4C sont des vues schématiques de face, de l'arrière et en coupe selon le plan A-A de la membrane souple de l'accessoire de raccordement selon l'invention ;
- la figure 5 est une vue schématique en perspective du côté extérieur de l'accessoire de raccordement de la figure 1A à l'état sorti de moulage pourvu de sa membrane souple ;
- la figure 6 est une vue schématique en perspective du côté intérieur de l'accessoire de raccordement de la figure 5;
- la figure 7 est une vue en coupe selon le plan D-D de la figure 6 ;
- la figure 8 est une vue schématique en perspective de l'accessoire de fixation du conduit de cheminement de câbles de la figure 1A sur une paroi ; et
- la figure 9 est une vue en bout du conduit de cheminement de câbles de la figure 1A.

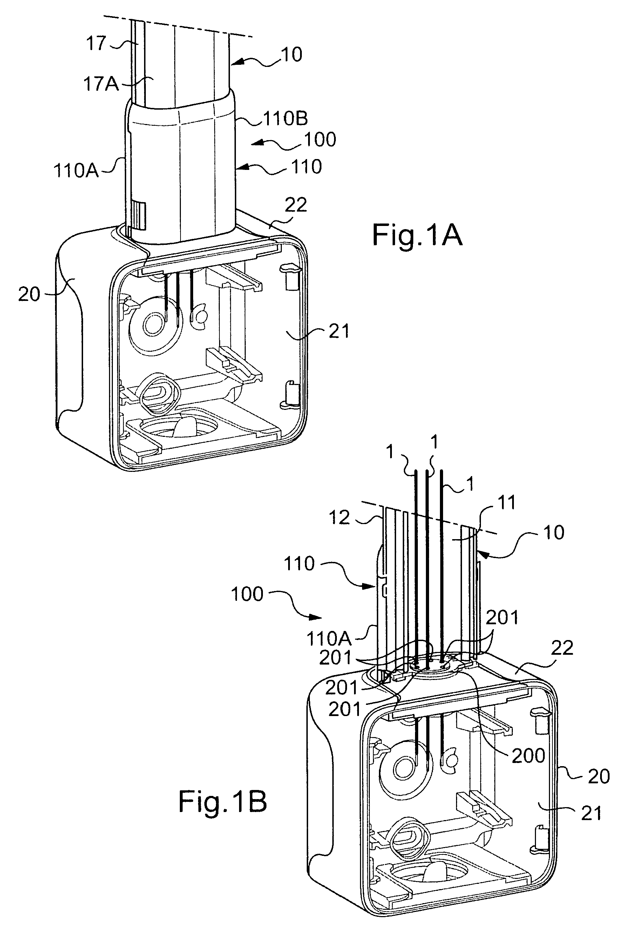

Sur les figures 1A et 1 B, on a représenté un conduit 10 de cheminement de câbles ou de conducteurs électriques, ici une moulure, à rapporter en saillie sur une paroi quelconque, dont une extrémité est raccordée au moyen d'un accessoire de raccordement 100 à un boîtier 20 d'appareillage électrique à fixer à ladite paroi.

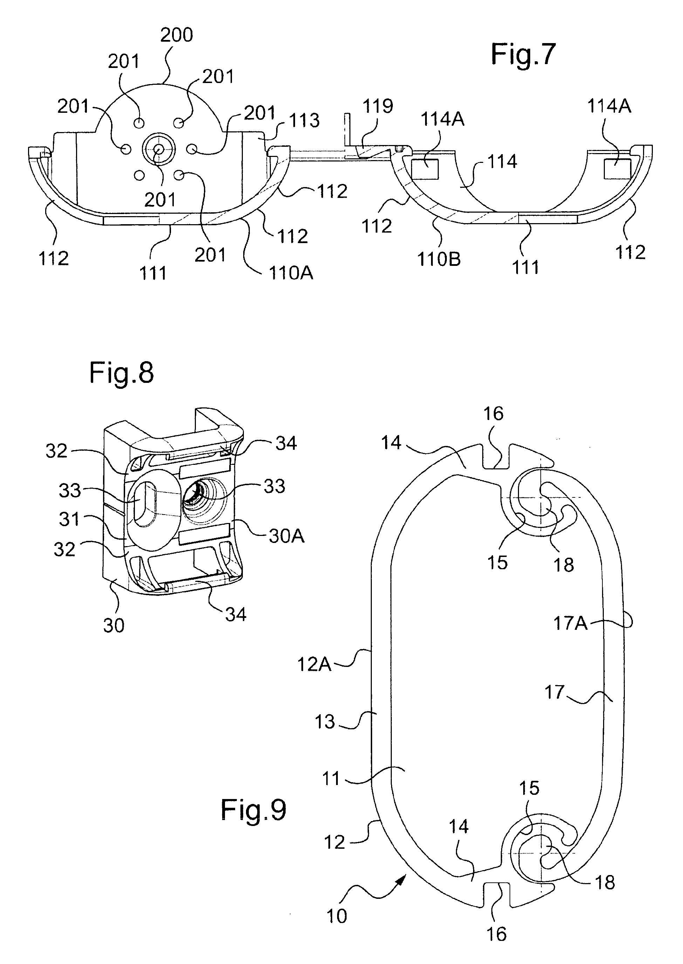

Comme le montre plus particulièrement la figure 9, le conduit 10 de cheminement de câbles ou de conducteurs électriques présente une section globalement ovale ou elliptique avec un socle 12 fermé par un couvercle 17.

Le socle 12 comporte un fond 13 plat à partir duquel s'élèvent, sur ses bords longitudinaux parallèles, de courtes ailes latérales 14 à profil courbe portant en tête des retours 15 dirigés l'un vers l'autre. Les retours 15 définissent des gorges de montage par encliquetage de pattes d'encliquetage 18 prévues sur les deux bords longitudinaux du couvercle 17.

Le socle 12 comporte deux rainures longitudinales 16 parallèles en renfoncement de la surface externe 12A de ses ailes latérales 14. Chaque rainure longitudinale 16 est située à proximité du retour 15 porté en tête de l'aile latérale 14 correspondante du socle 12.

Avantageusement, le conduit 10 de cheminement de câbles ou de conducteurs électriques est fixé à la paroi correspondante (non représentée) au moyen d'accessoires de fixation 30 dont un exemple est représenté sur la figure 8.

Cet accessoire de fixation 30, appelé communément lyre, comporte une face arrière (non visible sur la figure 8) destinée à reposer sur la paroi de fixation et une face avant 30A qui forme un berceau de réception du socle 12 du conduit 10.

Ce berceau de réception comporte un fond 31 plat recevant le fond 13 plat du socle 12, bordé par deux parois latérales 32 légèrement courbes qui reçoivent les ailes latérales 14 courbes du socle 12.

En tête, les deux parois latérales 32 de la lyre 30 comprennent des retours 34 dirigés l'un vers l'autre qui forment des dents d'accrochage destinées à s'accrocher dans les rainures longitudinales 16 prévues sur la face externe 12A du socle 12 pour maintenir celui-ci dans le berceau de réception de la lyre 30.

Le fond 31 plat du berceau de réception de la lyre 30 est percé de deux orifices 33 traversants, un orifice de section oblongue et un orifice de section circulaire, pour le passage de vis de fixation afin de solidariser la lyre 30 à la paroi.

Avantageusement, les lyres 30 présentent une certaine épaisseur et le conduit 10 qui repose sur celles-ci est placé à distance de la paroi de fixation de manière que son extrémité à raccorder au boîtier 20 d'appareillage électrique fixé lui-même à ladite paroi, se positionne au niveau de l'ouverture d'entrée prévue dans la paroi latérale 22 correspondante dudit boîtier 20.

Comme le montrent les figures 1A et 1B, l'accessoire de raccordement 100 permet de raccorder de manière étanche les espaces intérieurs 21,11 du boîtier 20 et du conduit 10.

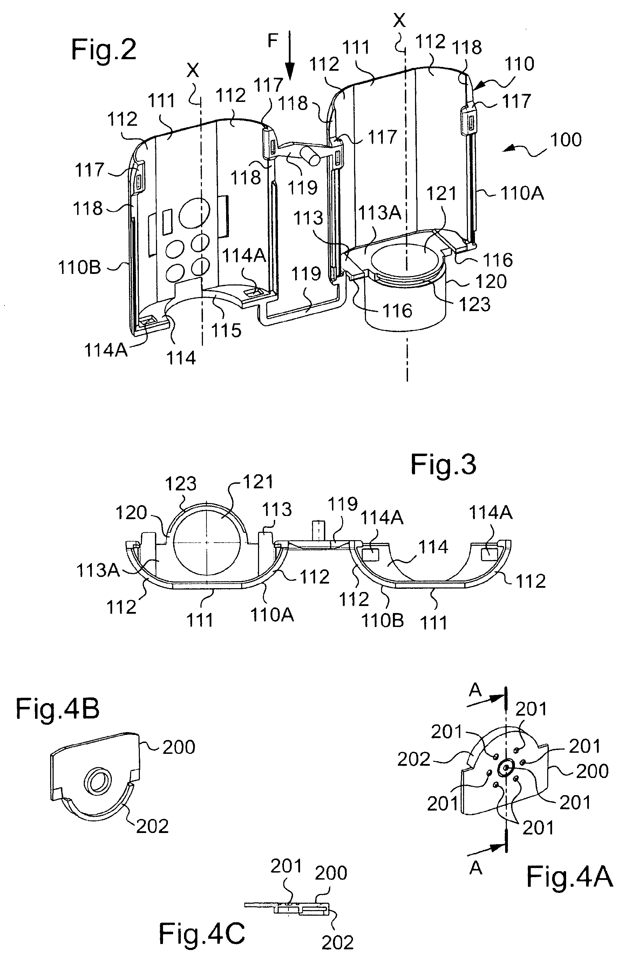

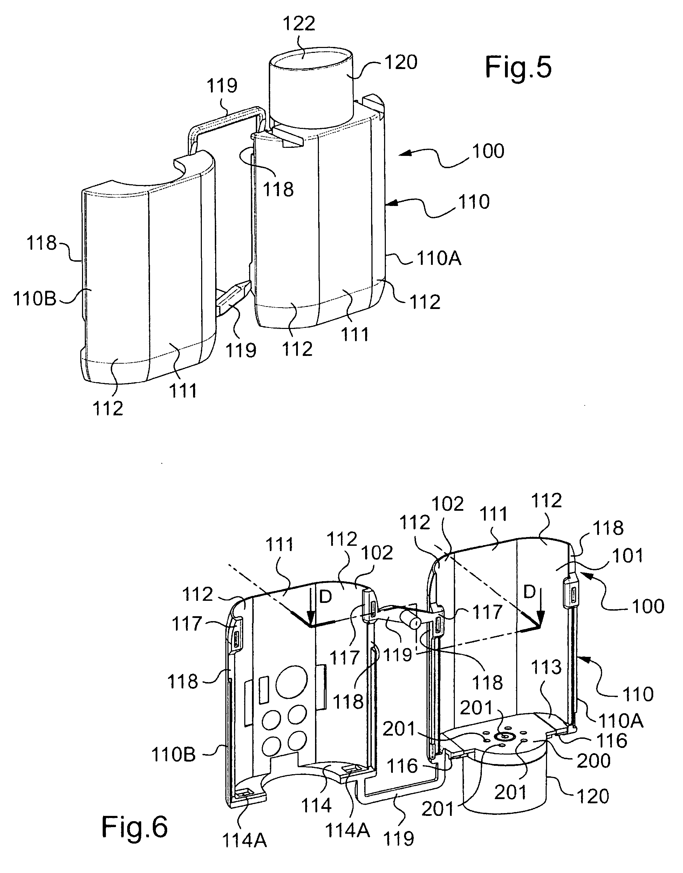

Cet accessoire de raccordement 100 comporte un boîtier de jonction 110 à monter à une extrémité dudit conduit 10 prolongé par un conduit tubulaire 120 d'insertion dans ledit boîtier 20 (voir figures 2, 3, 5, 6, 7).

Le conduit tubulaire 120 forme un conduit de passage entre les espaces intérieurs 11,21 du conduit 10 du boîtier 20.

Selon une caractéristique particulièrement avantageuse de l'accessoire de raccordement 100 représenté, le conduit tubulaire 120 d'insertion présente une section circulaire dont le diamètre extérieur correspond au diamètre extérieur normalisé d'un conduit rigide d'entrée de câbles.

En particulier, En particulier, le conduit tubulaire 120 d'insertion a un diamètre extérieur de 20 mm, dont la capacité de câblage correspond à celle du conduit représenté.

Ce diamètre extérieur pourrait également être de 16, 25 ou 32 mm, dimensions normalisées, avec des tolérances de fabrication également normalisées.

Ainsi, ce conduit tubulaire 120 d'insertion peut être engagé dans une ouverture d'entrée circulaire standardisée du boîtier 20 et réalisé une liaison étanche entre l'intérieur et l'extérieur du boîtier.

Comme le montrent les figures 2, 3, 5, 6 et 7 le boîtier de jonction 110 comporte deux parties 110A,110B rigides dont une partie de fond 110A portant ledit conduit tubulaire 120 d'insertion et une partie de couvercle 110B.

Lesdites parties 110A,110B du boîtier de jonction 110 s'étendent selon un axe X, elles forment des demi-coques à positionner l'une contre l'autre.

Chaque demi-coque 110A, 110B comporte une paroi de fond centrale 111 plane bordée longitudinalement par des parois latérales 112 courbes.

Chaque demi-coque 110A, 110B est ouverte ou débouchante à une extrémité 102 et est fermée à l'autre extrémité par une paroi d'extrémité 113,114 transversale.

La paroi d'extrémité 113 transversale de la partie de fond 110A porte extérieurement le conduit tubulaire 120 d'insertion dont une extrémité débouche à l'intérieur du boîtier de jonction 110 par une ouverture circulaire 121 et dont l'autre extrémité débouche vers l'extérieur du boîtier de jonction 110 par une ouverture circulaire 122.

La paroi d'extrémité 114 transversale de la partie de couvercle 110B comporte une encoche 115 demi-circulaire dont le fond s'applique contre le contour du conduit tubulaire 120 d'insertion muni de la membrane souple 200 lorsque les deux demi-coques 110A, 110B sont positionnées l'une sur l'autre autour du conduit 10 de cheminement de câbles ou de conducteurs électriques.

Les parois 111,112 des deux parties de fond 110A et de couvercle 110B du boîtier de jonction 110 sont en effet adaptées à sensiblement s'appliquer sur la face externe 12A,17A de l'extrémité du conduit 10 en l'entourant complètement.

Le boîtier de jonction 110 forme alors une coque extérieure dure de section globalement ovale ou elliptique qui entoure ladite extrémité du conduit 10.

Le boîtier de jonction 110 peut entourer complètement l'extrémité du conduit 10 parce que celui-ci est monté à distance de la paroi de fixation en étant fixé aux lyres 30 qui reposent sur cette paroi de fixation.

Ainsi, la partie de fond 110A dudit boîtier de jonction 110 recouvre la face extérieure 12A du socle 12 de conduit 10 en se logeant dans l'espace libre situé entre le socle 12 et la paroi de fixation (non représentée) (voir figure 1A). La partie de couvercle 110B du boîtier de jonction 110 recouvre la surface externe 17A du couvercle 17 du conduit 10 en venant bord à bord de manière étanche avec ladite partie de fond 110A.

Lorsque la partie de fond 110A et la partie de couvercle 110B du boîtier de jonction 110 sont positionnées autour de l'extrémité du conduit 10, le conduit tubulaire 120 d'insertion de l'accessoire de raccordement 100 s'étend au-delà du conduit 10 dans son prolongement longitudinal.

Comme le montrent plus particulièrement les figures 1A, 1B, 2 et 6, chacune des deux parties 110A,1110B du boîtier de jonction 110 comporte des moyens de montage pour être montée indépendamment l'une de l'autre sur ledit conduit 10 de cheminement de câbles.

Selon l'exemple représenté, ces moyens de montage comprennent, sur chaque partie 110A,110B du boîtier de jonction 110, au moins deux crochets 117 disposés sur deux bords longitudinaux 118 parallèles de ladite partie 110A, 110B pour faire saillie vers l'intérieur 101 du boîtier de jonction 110, les deux crochets 117 d'une des parties 110A étant décalés axialement (selon l'axe X) par rapport aux deux crochets 117 de l'autre partie 110B.

Ces crochets 117 sont conformés pour s'accrocher dans les rainures longitudinales 16 parallèles prévues en renfoncement sur la face externe 12A du socle 12 du conduit 10 de cheminement de câbles.

En outre, ici, chacune des deux parties 110A, 110B du boîtier de jonction 110 comporte des moyens de verrouillage adaptés à coopérer les uns avec les autres pour rendre solidaire les deux parties 110A, 110B placées de manière jointive l'une contre l'autre. Selon l'exemple représenté, ces moyens de verrouillage comprennent des griffes ou des dents 116 qui font saillies de la face extérieure de la paroi d'extrémité 113 transversale de la partie de fond 110A du boîtier de jonction (110), et des ouvertures 114A prévues dans la paroi d'extrémité 114 transversale de la partie de couvercle 110B pour recevoir par encliquetage lesdites griffes ou dents 116.

Selon une variante de réalisation non représentée, on peut prévoir que les deux parties du boîtier de jonction sont reliées l'une à l'autre par une charnière d'articulation.

Avantageusement la partie de fond 110A du boîtier de jonction 110 et le conduit tubulaire 120 sont réalisés d'une seule pièce par moulage d'une matière plastique. Les deux parties ou demi-coques 110A,110B du boîtier de jonction 110 sont réalisées d'une seule pièce par moulage d'une matière plastique. En sortie de moule lesdites demi-coques 110A, 110B sont liées l'une à l'autre par deux liens 119 cassables au détachables desdites demi-coques 110A, 110B.

Par ailleurs, selon une autre caractéristique particulièrement avantageuse de l'accessoire de raccordement 100, il comprend une membrane souple 200 qui obstrue une section du conduit tubulaire 120 formant le conduit de passage et qui est adaptée à s'appliquer autour de chaque conducteur ou câble électrique 1 qui la traverse (voir figures 1 B, 6 et 7).

Cette membrane souple 200 arrête les flux d'air froid circulant dans le conduit 10 pour éviter que ceux-ci ne se propagent à l'intérieur du boîtier 20 via ledit conduit tubulaire 120.

La membrane souple 200 est logée dans la coque extérieure dure formée par le boîtier de jonction 110 et elle est disposée à une extrémité intérieure du conduit tubulaire 120 c'est-à-dire à l'extrémité du conduit tubulaire 120 qui débouche à l'intérieur du boîtier de jonction 110 de l'accessoire de raccordement 100. Comme le montrent plus particulièrement les figures 1B, 4A, 6 et 7, la membrane souple 200 est adaptée à être traversée par plusieurs câbles ou conducteurs électriques 1 en divers endroits 201. Cette membrane souple 200 se présente ici sous la forme d'une plaquette de faible épaisseur, globalement rectangulaire avec une partie en forme de demi-disque. Elle porte sur sa face arrière un rebord 202 qui suit le bord demi-circulaire de ladite plaquette. La plaquette comporte dans sa région centrale des zones localisées 201 dont l'épaisseur est amincie pour être transpercée par des câbles ou des conducteurs électriques 1 (voir figures 4A, 4B, 4C).

La membrane souple 200 est réalisée par moulage d'une matière élastomère ou équivalent.

Elle est ici obtenue par injection d'une matière élastomère dans le moule de moulage du boîtier de jonction pour être placée dans un renfoncement 113A de la face interne de la paroi d'extrémité 113 transversale de la partie de fond 110A du boîtier de jonction 110 de manière à obstruer l'ouverture d'extrémité 121 du conduit tubulaire 120 d'insertion qui débouche à l'intérieur du boîtier de jonction 110.

La membrane souple 200 et le boîtier de jonction 110 forment une seule pièce monobloc issue de moulage.

Afin de fermer de manière étanche la section du conduit tubulaire 120, la membrane souple 200 présente une largeur supérieure au diamètre interne dudit conduit tubulaire 120 de sorte que lorsqu'elle est mise en place dans le renfoncement 113A de la paroi d'extrémité 113 du boîtier de jonction, elle déborde de ladite ouverture d'extrémité 121 du conduit tubulaire 120 et vient à effleurement de la face interne de ladite paroi d'extrémité 113. Le rebord 202 en demi-cercle porté par la face arrière de la membrane souple 200 se loge dans un décrochement 123 de la face externe cylindrique du conduit tubulaire 120 pour réaliser une étanchéité sur le contour dudit conduit tubulaire 120 (voir figures 2, 3 et 6).

Bien entendu selon une variante de réalisation non représentée, on peut prévoir de rapporter ladite membrane souple dans ledit boîtier de jonction.

La présente invention n'est nullement limitée au mode de réalisation décrit et représenté, mais l'homme du métier saura y apporter toute variante conforme à son esprit.

## Revendications

1. Accessoire de raccordement (100) entre les espaces intérieurs (21,11) d'un boîtier (20) d'appareillage électrique et d'un conduit (10) de cheminement de câbles à rapporter en saillie sur une paroi, cet accessoire de raccordement comportant un conduit de passage (120), **caractérisé en ce qu'**il comprend une membrane souple (200) qui obstrue une section dudit conduit de passage (120), cette membrane souple (200) étant adaptée à s'appliquer autour de chaque conducteur ou câble électrique (1) qui la traverse.

2. Accessoire de raccordement selon la revendication 1, **caractérisé en ce que** la membrane souple (200) est disposée à une extrémité intérieure (121) du conduit de passage (120).

3. Accessoire de raccordement selon l'une des revendications précédentes, **caractérisé en ce que** la membrane souple (200) est adaptée à être traversée par plusieurs câbles ou conducteurs électriques (1) en divers endroits (201).

4. Accessoire de raccordement selon l'une des revendications précédentes, **caractérisée en ce que** la membrane souple (200) se présente sous la forme d'une plaquette de faible épaisseur dont une partie centrale comporte des zones localisées (201) d'épaisseur amincie aptes à être transpercées par des câbles ou conducteurs électriques (1).

5. Accessoire de raccordement selon l'une des revendications précédentes, **caractérisé en ce qu'**il comprend une coque extérieure dure qui loge ladite membrane souple (200).

6. Accessoire de raccordement selon l'une des revendications précédentes, **caractérisé en ce qu'**il comporte un boîtier de jonction (110) à monter à une extrémité du conduit (10) de cheminement de câbles, prolongé par un conduit tubulaire (120) d'insertion dans le boîtier (20) d'appareillage électrique.

7. Accessoire de raccordement selon la revendication précédente, **caractérisé en ce que** ledit conduit tubulaire (120) d'insertion présente une section circulaire dont le diamètre extérieur correspond au diamètre extérieur normalisé d'un conduit rigide d'entrée de câbles.

8. Accessoire de raccordement selon l'une des revendications 6 et 7, **caractérisé en ce que** ledit boîtier de jonction (110) présente des parois (111,112) adaptées à s'appliquer sur la face externe (12A) de l'extrémité du conduit (10) de cheminement de câbles en l'entourant complètement.

9. Accessoire de raccordement selon l'une des revendications 6 à 8, **caractérisé en ce que** ladite membrane souple (200) obstrue une ouverture d'extrémité (121) du conduit tubulaire (120) d'insertion débouchante dans ledit boîtier de jonction (110).

10. Accessoire de raccordement selon l'une des revendications précédentes, **caractérisé en ce que** ladite membrane souple (200) est rapportée dans l'accessoire.

11. Accessoire de raccordement selon l'une des revendications 1 à 9, **caractérisé en ce que** ladite membrane souple vient de formation avec l'accessoire.

12. Accessoire de raccordement selon l'une des revendications précédentes, **caractérisé en ce qu'**il comporte deux demi-coques (110A,110B) pourvues de moyens de montage (117) pour être montées indépendamment l'une de l'autre sur ledit conduit (10) de cheminement de câbles.

13. Accessoire de raccordement selon la revendication précédente, **caractérisé en ce que** lesdits moyens de montage comprennent sur chaque demi-coque (110A, 110B) au moins deux crochets (117) disposés sur deux bords longitudinaux parallèles (118) de ladite demi-coque pour faire saillie vers l'intérieur dudit boîtier de jonction (110), les deux crochets (117) d'une des demi-coques (110A) étant décalés axialement par rapport aux deux crochets (117) de l'autre demi-coque (110B).

14. Accessoire de raccordement selon la revendication précédente, **caractérisé en ce que** lesdits crochets (117) sont conformés pour s'accrocher dans des rainures longitudinales (16) parallèles prévues en renfoncement sur la face externe du socle (12) du conduit (10) de cheminement de câbles.

15. Accessoire de raccordement selon l'une des revendications 12 à 14, **caractérisé en ce que** chacune des deux demi-coques (110A,110B) comporte des moyens de verrouillage adaptés à coopérer les uns avec les autres pour rendre solidaires les deux demi-coques.

16. Accessoire de raccordement selon la revendication précédente, **caractérisé en ce que** lesdits moyens de verrouillage comprennent des griffes (116) qui font saillies d'une paroi d'extrémité (113) d'une des deux demi-coques (110A) et des ouvertures (114A) qui sont prévues dans une paroi d'extrémité (114) de l'autre des deux demi-coques (110B) et qui sont adaptées à recevoir par encliquetage lesdites griffes (116).

17. Accessoire de raccordement selon l'une des revendications 6 à 16, **caractérisé en ce que** le boîtier de jonction (110) présente une section non circulaire.
